# EUROPEAN PATENT APPLICATION

(11) **EP 4 491 858 A1**
(43) Date of publication of application: **15.01.2025**
(21) Application number: 24181707.1
(22) Date of filing: 12.06.2024
(51) Int. Cl.: F02C 3/22, F02C 7/224, F02C 7/228

(54) **GAS TURBINE ENGINE FUEL SYSTEM**

(30) Priority: 10.07.2023 GB 202310557
(71) Applicant: Rolls-Royce plc, London N1 9FX (GB)
(72) Inventor: Rimmer, John, Derby, DE24 8BJ (GB); Ravikanti, Murthy, Derby, DE24 8BJ (GB); Chin, Thomas, Derby, DE24 8BJ (GB)
(74) Representative: Rolls-Royce plc

(57) **Abstract**

A fuel system for a gas turbine engine (103) comprises a fuel offtake (302) configured and arranged to divert a portion of hydrogen fuel from a main fuel conduit (217), a burner (218) configured and arranged to burn the portion of hydrogen fuel diverted from the main fuel conduit (217), a heat exchanger (306) configured and arranged to transfer heat from exhaust gasses produced by the burner (218) to hydrogen fuel in the main fuel conduit (217), and an outlet baffle (306) positioned between the burner (218) and the heat exchanger (306). The outlet baffle (306) is configured to introduce turbulence to combustion gases entering the heat exchanger (306).

## Description

### TECHNICAL FIELD

This disclosure relates to fuel systems for hydrogen-fuelled aero gas turbine engines.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, as either a compressed gas, a supercritical fluid, or a liquid. Such fuel requires heating prior to delivery to the gas turbine, both to permit combustion, and to prevent icing. As such, the applicant has filed patent application EP 3978738 directed to a pre-heater for heating hydrogen gas using an auxiliary combustor utilising a portion of the hydrogen fuel, and air bled from the gas turbine engine.

However, operation of the pre-heater significantly reduces efficiency of the gas turbine engine, resulting in an increase in specific fuel consumption of several percent.

### SUMMARY

The invention is directed towards a fuel system for a gas turbine engine, the fuel system having a hydrogen fuel pre-heater for heating cryogenically-stored hydrogen fuel prior to injection into a gas turbine engine, and methods of operating such fuel systems and gas turbine engines.

In a first aspect, one such fuel system comprises:
a fuel offtake configured to divert a portion of hydrogen fuel from a main fuel conduit;
a burner configured to burn the portion of hydrogen fuel diverted from the main fuel conduit;
a heat exchanger configured to transfer heat from exhaust gasses produced by the burner to fuel in the main fuel conduit; and
at least one outlet baffle positioned between the burner and the heat exchanger configured to introduce turbulence to combustion gases entering the heat exchanger.

The inventors have found that, due to the close proximity required between the heat exchanger and burner in a hydrogen pre-heater, hot spots occur within the burner exhaust gases, which result in damage of the heat exchanger, and low heat exchange efficiency. Similarly, the burner exhaust gases have a non-uniform velocity profile downstream of the burner, which again reduces heat exchanger efficiency. A still further problem identified by the inventors is thermoacoustic oscillation within preheater combustion system. The present invention ensures that sufficient mixing of the exhaust gases takes place within a compact volume, thereby ensuring high heat exchange efficiency, long component life, and a compact unit, whilst also damping thermoacoustic vibrations and providing a more uniform velocity profile within the heat exchanger.

The outlet baffle may comprise a plate comprising a plurality of through-holes. Advantageously, the through-holes provide the necessary turbulence in the downstream gases.

Alternatively, the outlet baffle may comprise an open cell porous mesh comprising a plurality of through-holes. Advantageously, the open cell porous mesh may provide more consistent outlet conditions and may produce a lower pressure-drop than a plate having through-holes.

The through-holes may be sized to prevent flame transmission through the baffle. The inventors have found that, in some circumstances, flames can travel between the pre-heater burner and heat exchanger, which may result in damage to the heat exchanger. In order to prevent this, it may be necessary to provide large spacing between the burner and heat exchanger. Consequently, by providing holes sized to prevent transmission of flames through the outlet baffle (i.e. such that the baffle acts as a flame arrestor), damage to the heat exchanger can be prevented, while the pre-heater can be made more compact.

The fuel system may comprise an inlet baffle provided upstream in air flow of the burner. Advantageously, turbulent mixing of inlet air is provided, allowing further reductions in pre-heater volume.

The fuel system may comprise an auxiliary heater configured to heat hydrogen fuel in the fuel offtake, configured to heat hydrogen fuel prior to provision to the burner.

The fuel system may comprise an ignitor configured to ignite hydrogen fuel within the burner. The ignitor may comprise one or more of an electric ignitor and a hydrogen torch. The hydrogen torch may be provided downstream in fuel flow of the auxiliary heater. Alternatively, the fuel system may comprise a further offtake configured to provide hydrogen fuel to the hydrogen torch which bypasses the auxiliary heater.

The or each outlet and / or inlet baffle may be arranged to provide a pressure-drop of between 1 and 10% between an inlet and an outlet, and may be arranged to provide a pressure-drop of approximately 3%.

The or each outlet and / or inlet baffle may comprise through holes having a diameter between 0.5 and 10mm.

The fuel system may comprise a plurality of outlet baffles and / or a plurality of inlet baffles arranged in series, and may comprise up to four inlet baffles and four outlet baffles arranged in series.

Where a plurality of inlet or outlet baffles are provided in series, the plurality of inlet or outlet baffles may be provided with a spacing of between 2mm and 50mm between each baffle in series.

In a second aspect, there is provided a gas turbine engine comprising a fuel system according to the first aspect.

### BRIEF DESCRIPTION OF THE DRAWINGS

Embodiments will now be described by way of example only with reference to the accompanying drawings, which are purely schematic and not to scale, and in which:
Figure 1 shows a hydrogen-fuelled airliner comprising hydrogen-fuelled turbofan engines;
Figure 2 is a block diagram of one of the engines of Figure 1;
Figure 3 is a block diagram of part of a fuel system for the engine of figure 2;
Figures 4A and 4B show alternative configurations of baffles for the fuel system of figure 3;
Figure 5 shows a first alternative configuration of a fuel system for the gas turbine engine of figure 2;
Figure 6 shows a second alternative configuration of a fuel system for the gas turbine engine of figure 2; and
Figures 7a to 7c show further alternative configurations of baffles for the fuel system of figure 3.

### DETAILED DESCRIPTION

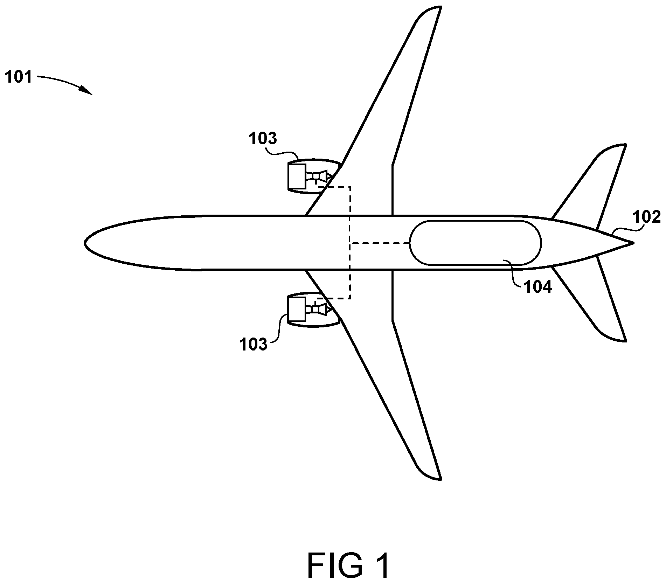

A hydrogen-fuelled airliner is illustrated in Figure 1. In this example, the airliner 101 is of substantially conventional tube-and-wing twinjet configuration with a central fuselage 102 and substantially identical underwing-mounted turbofan engines 103.

A hydrogen storage tank 104 is located in the fuselage 102. In the present embodiment, the hydrogen storage tank 104 is a cryogenic hydrogen storage tank and stores the hydrogen fuel in a liquid state, in a specific example at 22 Kelvin. In this example, the hydrogen fuel is pressurised to a pressure from around 1 bar to around 3 bar, in a specific example 2 bar. Alternatively, the hydrogen storage tank could store hydrogen fuel in a sub-cooled, high pressure gaseous or supercritical state.

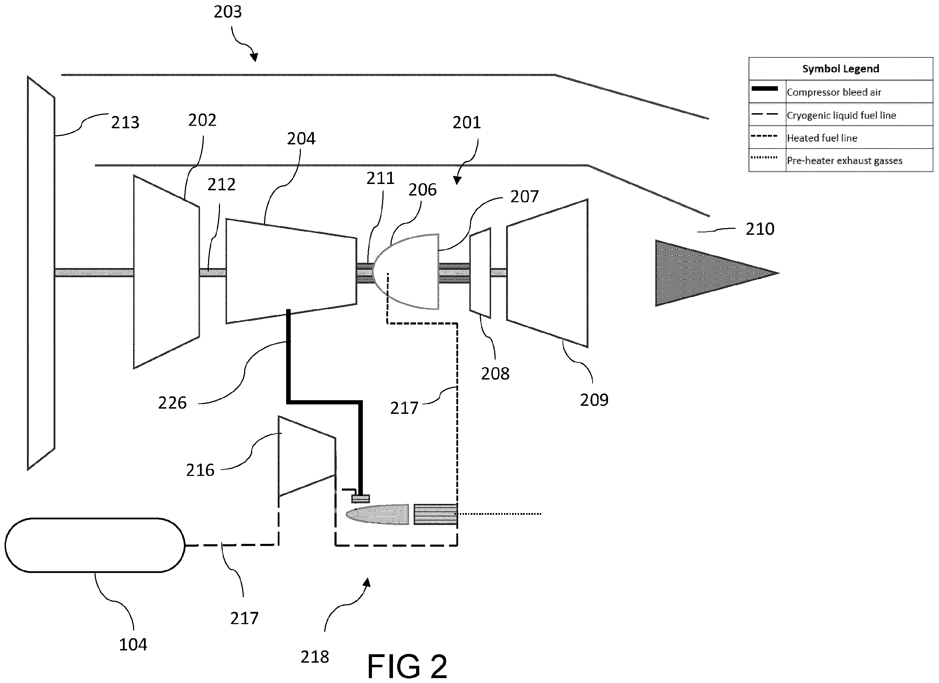

A block diagram of one of the turbofan engines 103 is shown in Figure 2.

The turbofan engine 103 comprises a core gas turbine 201.

The core gas turbine 201 comprises, in fluid flow series, a low-pressure compressor 202, a high-pressure compressor 204, a core gas turbine combustion system 206, a high-pressure turbine 208, a low-pressure turbine 209, and a core nozzle 210. The high-pressure compressor 204 is driven by the high-pressure turbine 208 via a first shaft 211, and the low-pressure compressor 203 is driven by the low-pressure turbine 209 via a second shaft 212. It will be appreciated that in alternative embodiments, the core gas turbine could be of three-shaft configuration, and / or could comprise a reduction gearbox between the fan and low-pressure turbine.

In operation, the low-pressure turbine 209 drives a fan 213 via shaft 212.

In operation, hydrogen fuel is pumped from the hydrogen storage tank 104 by a pump 216 and into a main fuel conduit 217 which ultimately delivers fuel to the fuel injection system 206. The pump may be driven by an electric machine or via one or more of the gas turbine engine core shafts 211, 212 via an auxiliary gearbox.

As will be appreciated, it is desirable to increase the temperature of the fuel from the cryogenic storage condition to a temperature much closer to the firing temperature of the core gas turbine 201; this is typically subject to the constraint of not exceeding the autoignition temperature of the hydrogen fuel prior to admission into the combustor 207. In an example, the injection temperature is from 250 to 300 kelvin, for example 250 kelvin. In some cases, it may be desirable to increase the fuel temperature to above an icing temperature, such as 273 Kelvin.

In the present embodiment, a pre-heater 218 is therefore provided for heating of the hydrogen fuel, and possibly to implement a phase change where the hydrogen is stored as a liquid. In the present embodiment, this takes place between the pump 216 and the gas turbine engine core combustion 206. In an embodiment, the pre-heater 218 is configured to raise the temperature of the hydrogen fuel to the required injection temperature.

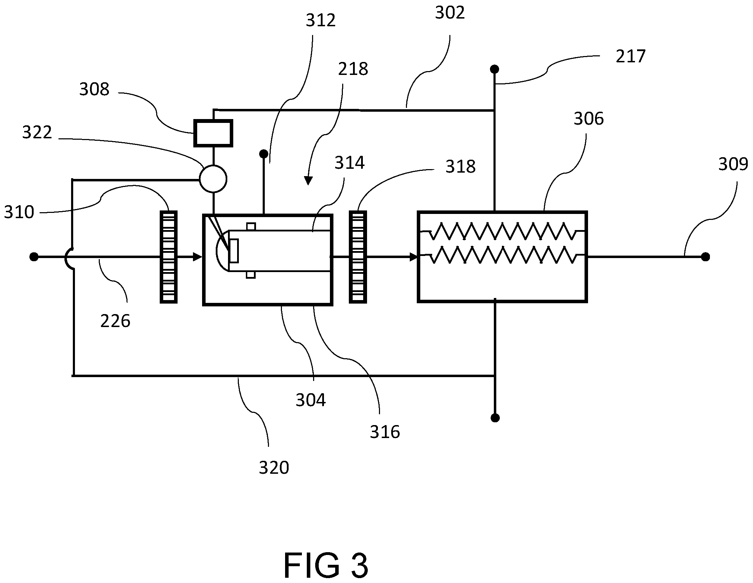

The pre-heater 218 is shown in further detail in figure 3, and comprises an offtake 302 to divert a portion of the hydrogen fuel from the main fuel conduit 217. The amount of hydrogen bled from the main fuel conduit 217 is controlled by a valve 322. In an embodiment, the valve 322 is controlled actively by a controller (not shown), for example in response to the temperature of the fuel at gas turbine engine core combustor 206. Alternatively, the valve 322 may be passively controlled. In operation, of the order of around 1 percent of the hydrogen fuel flow through the main fuel conduit 217 is bled for use in the burner 218.

As described previously, hydrogen has very high specific and latent heat capacities; however as a gas it has a very low molecular weight and density, and thus it can be challenging to exchange heat in a compact way. Thus, the pre-heater 218 heats the hydrogen fuel in the main fuel conduit 217 by combustion of the bled fuel in a burner 304 located in heat exchange relationship with the main fuel conduit 217 via a heat exchanger 306. As will be understood, fuel for the burner 304 must also be provided at an acceptable temperature, and a smaller auxiliary fuel heater 308 may be provided for this. For example, the auxiliary fuel heater 308 may comprise an electric heater. A bypass passage 320 may be provided to control the fuel flow rate to the burner 218, which may be controlled by the valve 322.

It should be understood that, in the present example, the products of combustion from the burner 222 are not mixed with the fuel in the main fuel conduit 217. In this respect, the pre-heater 218 therefore differs from a pre-burner system as used in staged combustion cycle rocket engines.

In order to reduce the volume of the burner 304, it is desirable to use a high-pressure source of air, which provides sufficient mass-flow in a small volume to combust the hydrogen fuel. As such, air for combustion with the bled hydrogen fuel is bled from a compressor 202, 204 of the gas turbine engine core, and in this embodiment, from the high-pressure compressor 204. Air is bled from the high-pressure compressor 204 from a compressor bleed 226 (shown in figure 2). Alternatively, air may be bled from the low-pressure compressor 202.

A least one inlet baffle 310 is provided upstream of the burner 304 in compressed air flow, and in the present embodiment, two or more inlet baffles 310, 311 are provided, and in some cases, up to four inlet baffles may be provided. The inlet baffles 310, 311 are configured to reduce nonuniformity in inlet flow upstream of the burner 304. The inventors have found that compressor bleed air in the bleed air line 226 has a tendency to form a velocity profile which varies with distance from the outer wall, with velocities in the centre of the bleed air line 226 being higher than those at the wall, particularly in view of the relatively small diameter and potentially long length (and so high aspect ratio) of the bleed air line 226. This is in contrast to the air passage in a conventional gas turbine engine combustor, in which the passage to the combustor from the compressor inlet is relatively short, and typically has a large area relative to the volume of the combustor. Consequently, a burner based on a conventional gas turbine engine combustor may experience flame instability. Additionally, the relatively small volume of the burner 304, combined with the combustion properties of hydrogen, may result in combustion instabilities which manifest as thermoacoustic vibrations in use. By providing a baffle upstream of the burner 304, which introduces turbulence in the airstream, the air reaching the combustor is more uniform in terms of flow velocities. Additionally, thermoacoustic vibrations are damped by acoustic decoupling of the burner and the upstream compressor bleed air line 226. Without wishing to be restricted to theory, it is thought that this decoupling is a result of acoustic waves being dissipated through interaction with vortices. Vorticity is produced due to the viscous effect within shear layers. The rate of production is greatest where the velocity changes rapidly, such as the sharp edge of an aperture. Hence the large number of apertures in the baffle plate 310 thereby produce large levels of vorticity which act to suppress the acoustic wave. Consequently, vibrations in the bleed air line 226, and resulting potential instabilities in both the burner 304 and the compressor 204 are reduced or avoided.

The inventors have modelled various parameters, and selected parameters that minimise acoustic instabilities, and improve airflow velocity uniformity. The inlet baffle 310 provides a pressure drop in use of between 1% and 10%, with a preferred pressure drop of approximately 3%. A lower pressure-drop does not typically provide the required vorticity, while a higher pressure-drop may result in reduced mass-flow rate in the burner, and excessive back pressure in the bleed air line 226.

Apertures within the inlet baffle 310 are typically between 0.5 to 10mm diameter. Apertures smaller than 0.5mm are susceptible to blockage from particles such as sand and other foreign object debris that may be present in the compressor bleed air stream. Apertures larger than 10mm may not provide sufficient vorticity to provide the necessary airflow uniformity and acoustic decoupling. Additionally, hole sizes below 10mm will typically prevent propagation of flames from the burner 304 through the bleed air line 226 in the event of a drop in bleed air pressure, such as a compressor stall for example.

Where multiple baffles 310, 311 are provided in series, an axial gap between each baffle of between 2 and 50mm may be provided, to ensure sufficient vorticity at the outlet of each baffle 310, 311 such that sufficient mixing takes place. Spacing of greater than 50mm may result in the arrangement occupying excessive volume.

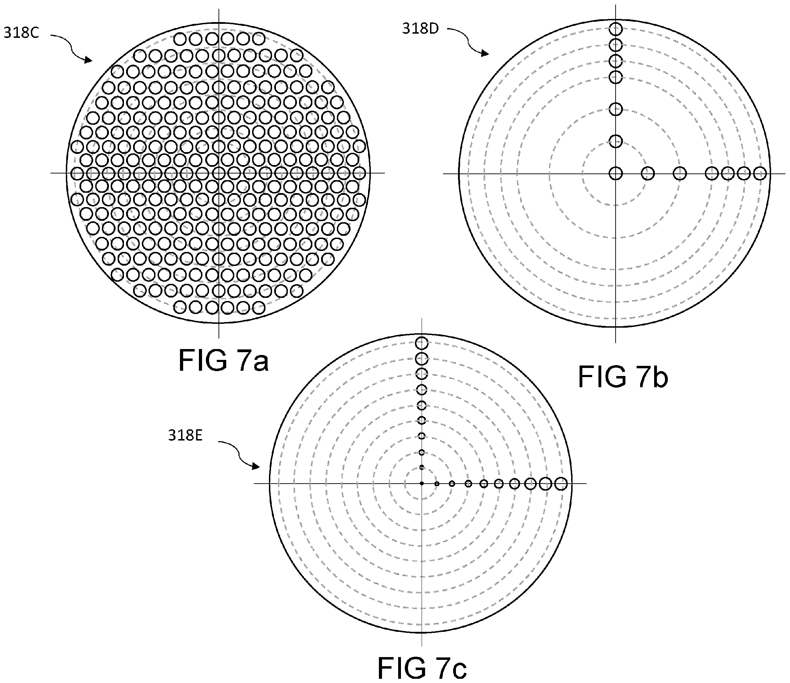

As shown in figures 7a to 7c, still further alternative baffle arrangements can be envisaged. Figure 7a shows an inlet baffle 318C having homogenous holes, distributed homogeneously. In the inlet baffle 318D, the distribution of holes varies radially, with a larger distribution of holes toward a radially outer part of the baffle 318D, such that more flow is provided at the radially outer part of the baffle. This may counteract the tendency for flow to slow at the outer walls due to interaction between the gas flow and walls. Consequently, a more homogenous flow is provided downstream of the baffle 318.

Similarly, baffle 318E has holes of differing sizes, with larger holes being provided at radially outer positions. Again, this impact flow through the baffle, to provide a more radially even distribution of flow across the baffle. As will be understood, the features could be combined, with hole sizes and densities varying radially.

The burner 304 itself receives heated hydrogen fuel from the offtake 302, and optionally from the auxiliary heater 308, combines this with compressed air from the compressor bleed 226, and combusts this combined gas flow to generate a heated exhaust gas flow which exits via an exhaust 309. An ignitor such as an electric spark ignitor 312 may be provided to initially ignite the fuel / air mix. The combustor is typically of a "can" type construction, having a central flame tube surrounded by a combustor casing 316. Air and fuel flows into the combustor can 314 where combustion takes place, while cooling air flows within the combustor casing 316, and is introduced into the combustor can 314 through dilution holes (not shown).

The inventors have found that the combustion gases flowing downstream of the burner 218 tend to have a temperature and velocity profile which is non-uniform. Typically, both the temperatures and velocities are highest towards the centre of the exhaust pipe, and lower towards the walls.

The fuel system comprises an outlet baffle 318, which is provided downstream of the burner 218, and upstream of the heat exchanger 306. Again, a plurality of outlet baffles may be provided (typically up to four), and in this embodiment, two outlet baffles 318, 319 are provided. The outlet baffle(s) 318, 319 are configured to induce turbulent flow in the exhaust gas stream, and thereby provide mixing of the exhaust gas to provide improved uniformity in a relatively small volume. Such an arrangement provides for the use of a heat exchanger downstream of the burner 304, without excessive length or spacing between the burner 304 and heat exchanger 306. In alternative arrangements (which are not in accordance with the present disclosure), the inventors have considered integrated heat exchangers, in which the heat exchanger is provided annularly around the burner, which also provide a short pre-heater. However, such arrangements result in large waste heat being output from the exhaust, which results in low efficiency. On the other hand, the present invention provides both high efficiency heat exchange, and short pre-heater length.

Parameters of the outlet baffles 318, 319 are similar to those of the inlet baffles 310, 311. As such, spacing between 5 and 50mm between baffles 318, 319 is provided, with holes of 0.5 to 10mm in diameter, and pressure drop of between 1 and 15%, and in the present embodiment, of approximately 8%.

The heat exchanger 306 downstream of the baffle 318 is typically in the form of a "tube and shell" heat exchanger, in which a plurality of tubes are provided, through which exhaust gases and fuel flow, to permit heat exchange. The heat exchanger 306 may comprise either counter-flow or co-flow arrangements. Other types of heat exchanges, such as matrix heat exchangers may also be suitable.

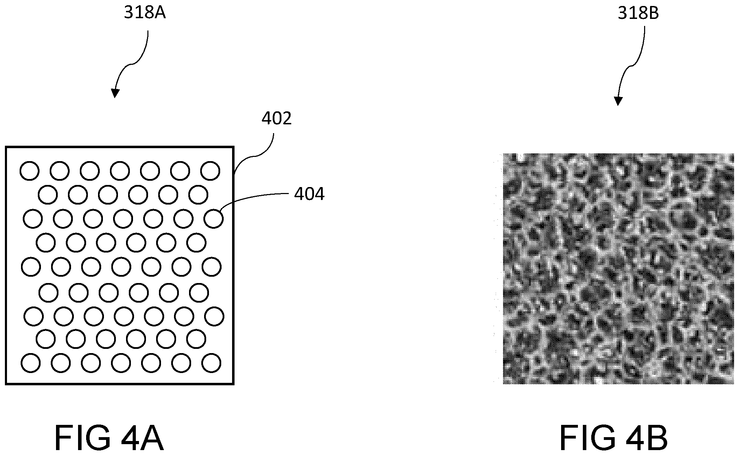

Figures 4A and 4B show alternative configurations of the baffles 310, 311, 318, 319. In the configuration shown in figure 4A, a baffle 318A comprises a plate 402, which comprises a plurality of through-holes 404. As will be understood, baffles 310, 311, 319 will be of similar construction. The plate 402 is typically formed of a metallic material, and is impermeable to air flow. Each through-hole 404 is sized such that, at the Reynolds number of the airflow, air emanating from a downstream end of each hole is turbulent. As such, the air downstream of the baffle 318A is mixed. The holes 404 may also be sized to act as flame arrestors, i.e. such that flames on one side of the baffle are prevented from propagating through the baffle, but airflow is permitted. Such a flame arrestor may prevent flames from propagating from a normally downstream end of the inlet baffle 310 (i.e. from the burner 218), toward the compressor bleed in the event of a flow reversal. Such a flow-reversal may occur, for example, during a compressor stall or surge. As such, safety is improved. Similarly, the outlet baffle 318 also comprises through-holes 404 sized to allow air flow, but prevent flame propagation, such that flames do not enter the heat exchanger 306. The through holes are typically between 0.5 and 10mm in diameter, to aid both in reduction in flame propagation, and production of vortices. As such, heat exchanger 306 life is improved, and the heat exchanger can be provided closer to the burner 218, without risking damage to the heat exchanger 218. Consequently, both safety and compactness are improved.

Figure 4B shows an alternative configuration of a baffle 318B. In this configuration, the baffle comprises an open-cell metal foam. Again, this baffles 310, 311, 319 could be formed of a similar construction. Suitable metal foams include high temperature steels and nickel-chromium alloy foam such as Retimet^{™}. Such metal foams have a high thermal conductivity, lending themselves to effective operation as a flame arrestor, as well as having high porosity and small hole size, making them suitable as baffles for providing turbulence in downstream flow. Additionally, the high thermal conductivity may assist in ensuring high temperature uniformity across the airflow. Where the hole size of the mesh varies, a maximum hole size may be less than a hole size through which flames from the burner 218 can propagate.

In some cases, one or baffles 310, 311, 318, 319 could be of a type of figure 4A, while another baffle could be of a type of figure 4B. For example, the plate type baffle may have a higher temperature capability, and so may be more suitable for use as an exit baffle 318, 319, particularly as the most upstream baffle 318, which may see the highest temperatures.

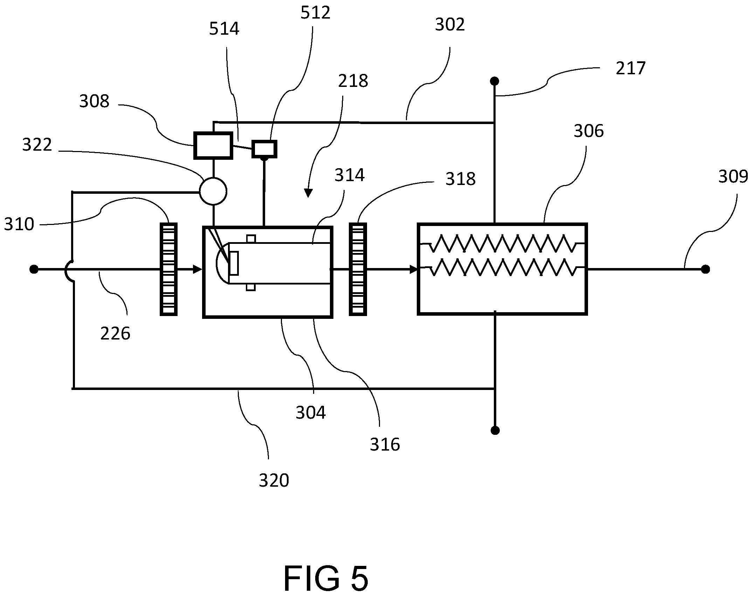

Figure 5 shows an alternative embodiment, in which the electric spark injector 312 is replaced by a hydrogen torch 512. The hydrogen torch is provided with heated hydrogen from the auxiliary fuel heater 308 via a further fuel offtake 514. The hydrogen torch 512 comprises a small volume, into which a mixture of hydrogen and oxygen (possibly from air) is introduced, which is itself ignited by a small electric ignitor. Flames from this hydrogen are introduced into the burner 304 via a small tube 516. This flame then ignites the air-fuel mixture within the burner 314. This arrangement further reduces combustion instabilities by providing a continuous source of ignition during operation, thereby further reducing thermoacoustic vibration. In contrast, an electric ignitor in the main burner 304 may generate a "hard start", which could damage the burner 304 and downstream components such as the heat exchanger 306.

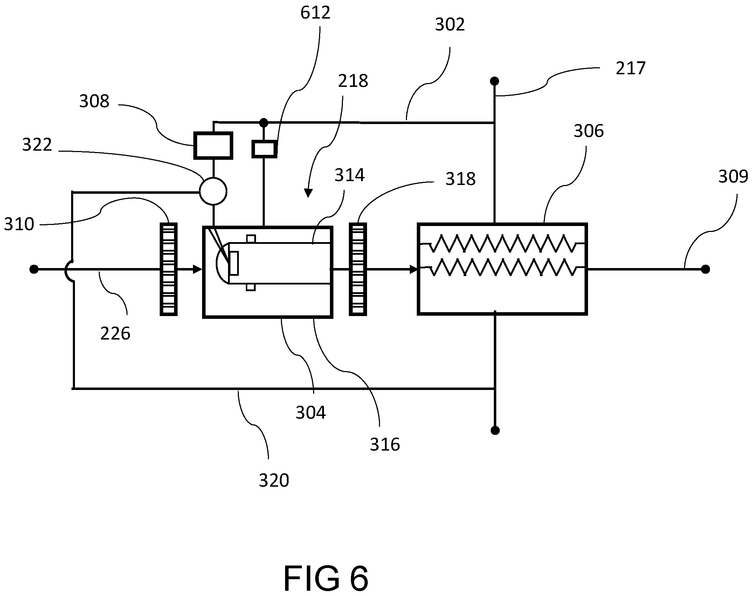

Figure 6 shows a further alternative embodiment. This embodiment is similar to that shown in figure 5, but the hydrogen torch 612 is provided with hydrogen fuel directly from the offtake 302, bypassing the auxiliary heater 308.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

## Claims

1. A fuel system for a gas turbine engine (103) comprising:
a fuel offtake (302) configured to divert a portion of hydrogen fuel from a main fuel conduit (217);
a burner (218) configured to burn the portion of hydrogen fuel diverted from the main fuel conduit (217);
a heat exchanger (306) configured to transfer heat from exhaust gasses produced by the burner (218) to fuel in the main fuel conduit (217); and
at least one outlet baffle (318A, 318B) positioned between the burner (218) and the heat exchanger (306) configured to introduce turbulence to combustion gases entering the heat exchanger (306).

2. A fuel system according to claim 1, wherein the outlet baffle (318A, 318B) comprises a plate (402) comprising a plurality of through-holes (404).

3. A fuel system according to claim 1, wherein the outlet baffle (318B) comprises an open cell porous mesh.

4. A fuel system according to claim 2 or claim 3, wherein the through-holes are sized to prevent flame transmission through the baffle (318A, 318B).

5. A fuel system according to any of the preceding claims, wherein the fuel system comprises an inlet baffle (310) provided upstream in air flow of the burner (218).

6. A fuel system according to any of the preceding claims, wherein the fuel system comprises an auxiliary heater (308) configured to heat hydrogen fuel in the fuel offtake (302), to heat hydrogen fuel prior to provision to the burner (218).

7. A fuel system according to any of the preceding claims, wherein the fuel system comprises an electric ignitor (312) configured to ignite hydrogen fuel within the burner (218).

8. A fuel system according to any of claims 1 to 6, wherein the wherein the fuel system comprises a hydrogen torch (512) configured to ignite hydrogen fuel within the burner (218).

9. A fuel system according to claim 8 when dependent on claim 6, wherein the hydrogen torch (512) is provided downstream in fuel flow of the auxiliary heater (308).

10. A fuel system according to claim 8 when dependent on claim 6, wherein the fuel system comprises a further offtake (514) configured to provide hydrogen fuel to the hydrogen torch (512) which bypasses the auxiliary heater (308).

11. A fuel system according to any of the preceding claims, wherein the or each outlet and / or inlet baffle (310A, 310B, 318A, 318B) is arranged to provide a pressure-drop of between 1 and 15% between an inlet and an outlet, and may be arranged to provide a pressure-drop of approximately 8%.

12. A fuel system according to any of the preceding claims, wherein the or each outlet and / or inlet baffle (310A, 310B, 318A, 318B) comprises through holes having a diameter between 0.5 and 10mm.

13. A fuel system according to any of the preceding claims, wherein fuel the system comprises a plurality of outlet baffles (318A, 318B) and / or a plurality of inlet baffles (310A, 310B) arranged in series, and may comprise up to four inlet baffles (310A, 310B) and four outlet baffles (318A, 318B) arranged in series.

14. A fuel system according to claim 13, wherein the plurality of inlet or outlet baffles (310A, 310B, 318A, 318B) are provided with a spacing of between 2mm and 50mm between each baffle in series (310A, 310B, 318A, 318B).

15. A gas turbine engine comprising a fuel system according to any of the preceding claims.
